# EUROPÄISCHE PATENTANMELDUNG

(11) **EP 1 661 689 A2**
(43) Veröffentlichungstag der Anmeldung: **31.05.2006**
(21) Anmeldenummer: 05025112.3
(22) Anmeldetag: 17.11.2005
(51) Int. Cl.: B29C 65/60, B29C 65/18

(54) **Verfahren und Vorrichtung zum Verbinden von Gegenständen mittels wenigstens eines plastifizierbaren Verbindungselements**

(30) Priorität: 25.11.2004 DE 102004057453
(71) Anmelder: Maschinenfabrik Spaichingen GmbH, 78549 Spaichingen (DE)
(72) Erfinder: Braun, Hans-Dieter, 78665 Frittlingen (DE)
(74) Vertreter: Freiherr von Schorlemer, Reinfried

(57) **Zusammenfassung**

Die Erfindung betrifft ein Verfahren und eine Vorrichtung zum Verbinden von Gegenständen mittels eines durch Wärme plastifizierbaren Verbindungselements, an dem mittels einer erwärmbaren Kalotte (1) ein Nietkopf ausgebildet wird. Erfindungsgemäß ist die Kalotte (1) kleinvolumig ausgebildet. Ihre Erwärmung erfolgt mit Hilfe eines zusammen mit ihr in Richtung des Verbindungselements beweglichen, als großvolumiger Wärmespeicher ausgebildeten Heizelements (3), das nach Ausbildung des Nietkopfs, jedoch vor dem Abziehen der Kalotte (1) vom Nietkopf von dieser getrennt wird, um eine schnelle Abkühlung des Nietkopfs zu ermöglichen (Fig. 1).

## Beschreibung

Die Erfindung betrifft ein Verfahren und eine Vorrichtung der in den Oberbegriffen der Ansprüche 1 und 5 angegebenen Gattungen.

Verfahren und Vorrichtungen dieser Art arbeiten nach dem sog. Nietdom-Schweißprinzip, wonach zunächst ein an einem der Gegenstände angebrachtes Verbindungselement mit einem an ihm ausgebildeten Vorsprung, dem sog. Nietdom, durch eine Öffnung des anderen Gegenstands gesteckt und dann am freien Ende des Nietdoms mit einem angeformten Nietkopf versehen wird. Das Verbindungselement kann dabei auch aus einem separaten Bauteil bestehen, das durch beide Gegenstände gesteckt wird und an einem Ende einen bereits vorher angebrachten Kopf aufweist.

Die Anformung des Nietkopfs erfolgt bei Anwendung des beschriebenen Schweißprinzips dadurch, daß der Nietdom durch Erwärmung plastifiziert und mittels eines nachfolgend als Kalotte bezeichneten und gegen den Nietdom gedrückten Werkzeugs in die im Einzelfall erwünschte Form gebracht wird. Dabei besteht meistens wenigstens einer der beiden Fügepartner aus einem plastifizierbaren Kunststoff, obwohl es prinzipiell aber auch ausreicht, wenn allein die beteiligten Verbindungselemente oder die an diesen vorgesehenen Nietdome aus einem plastifizierbaren Material bestehen.

Zur Erwärmung und Plastifizierung der Nietdome sind verschiedene Verfahren bekannt. Weit verbreitet ist z. B. das Ultraschallschweißen (z. B. DE 100 46 451 A1). Hierbei werden Ultraschall-Schwingwerkzeuge, sog. Sonotroden, auf die Nietdome aufgesetzt, um diese in hochfrequente Schwingungen zu versetzen und dadurch in sehr kurzer Zeit auf ihre Schmelztemperatur zu erwärmen. Nachteilig an diesem Verfahren sind der hohe apparative Aufwand und der Umstand, daß nicht oder nur bedingt Gegenstände aus Kunststoff und Metall miteinander verbunden werden können. Letzteres gilt insbesondere dann, wenn es um die Verbindung von Gegenständen geht, die gegenüber Schwingungen empfindlich sind, wie dies z. B. für Hochton-Lautsprecher zutrifft, die in Türverkleidungen von Kraftfahrzeugen eingebaut werden sollen.

Daneben sind Verfahren und Vorrichtungen der eingangs bezeichneten Gattungen bekannt, bei denen das Erweichen der Nietdome mit Hilfe einer vorher erwärmten Kalotte erfolgt, die mit den Nietdomen in Berührung gebracht wird. Ein Problem hierbei besteht darin, daß die erhitzte Kalotte, die zur Erzielung hoher Plastifizierungsgeschwindigkeiten eine möglichst große Masse haben sollte, nach der Ausformung der Nietköpfe nicht sofort von diesen abgezogen werden kann. Es muß vielmehr abgewartet werden, bis die Kalotte auf eine deutlich unterhalb der Schmelztemperatur des Nietdom-Materials liegende Temperatur abgekühlt ist, da andernfalls die Gefahr besteht, daß die Nietköpfe reißen oder die Kalotte Fäden zieht. Dadurch ergeben sich lange Schweißzeiten, die nur mit zusätzlichen Kühleinrichtungen auf ein erträgliches Maß reduziert werden können.

Schließlich sind Verfahren und Vorrichtungen zur berührungslosen Übertragung von Wärme auf die Nietdome bekannt (z. B. EP 0 965 400 A2, DE 100 38 158 A1). Die Nietdome werden hier mit erhitzter Luft angeblasen und/oder durch elektromagnetische Strahlung plastifiziert. Ein wesentlicher Nachteil dieser Technik besteht darin, daß durch die zur Erwärmung vorgesehenen Mittel auch die Umgebung erwärmt wird und es daher schwierig ist, den Prozeß insgesamt reproduzierbar zu steuern. Außerdem ist dies ein Grund dafür, daß die Heizzeiten nicht beliebig verkürzt werden können.

Ausgehend davon besteht das technische Problem der vorliegenden Erfindung darin, die Verfahren und Vorrichtungen der eingangs bezeichneten Gattungen so auszubilden, daß der Schweißprozeß mit einem verhältnismäßig geringen apparativen Aufwand und mit hoher Prozeßgeschwindigkeit, d. h. mit kürzeren Zyklusdauern als bisher sowohl für die Plastifizierungsphasen als auch für die nachfolgenden Abkühlungsphasen durchgeführt werden kann.

Zur Lösung dieser Aufgabe dienen die kennzeichnenden Merkmale der Ansprüche 1 und 5.

Die Erfindung bringt den Vorteil mit sich, daß die Kalotte ein vergleichsweise kleines Volumen bzw. eine kleine Masse erhalten kann. Dennoch ist einerseits eine schnelle Plastifizierung der Nietdome dadurch möglich, daß ein ausreichend leistungsstarkes Heizelement zumindest in die Nähe der Kalotte gebracht oder an diese angelegt wird. Andererseits kann auch eine schnelle Abkühlung der Kalotte und damit der hergestellten Nietköpfe erreicht werden, indem das Heizelement während oder unmittelbar nach der Ausformung der Nietköpfe von der Kalotte entfernt wird.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 einen schematischen Längsschnitt durch eine erfindungsgemäße Vorrichtung zur Verbindung von Gegenständen mittels eines plastifizierbaren Verbindungselements in einer Grundstellung;
Fig. 2 einen der Fig. 1 entsprechenden Schnitt, jedoch in einer Arbeitsstellung und nach Drehung der Vorrichtung um 90° um eine Längsachse;
Fig. 3 eine schematische und perspektivische Darstellung einzelner Teile der Vorrichtung in einer auseinander gezogenen Darstellung;
Fig. 4 in teilweise geschnittenen Ansichten die Vorrichtung nach Fig. 1 bis 3 in fünf unterschiedlichen Stellungen während eines kompletten Schweißzyklus; und
Fig. 5 bis 7 den Fig. 2, 1 und 4 entsprechende Ansichten eines zweiten Ausführungsbeispiels der erfindungsgemäßen Vorrichtung.

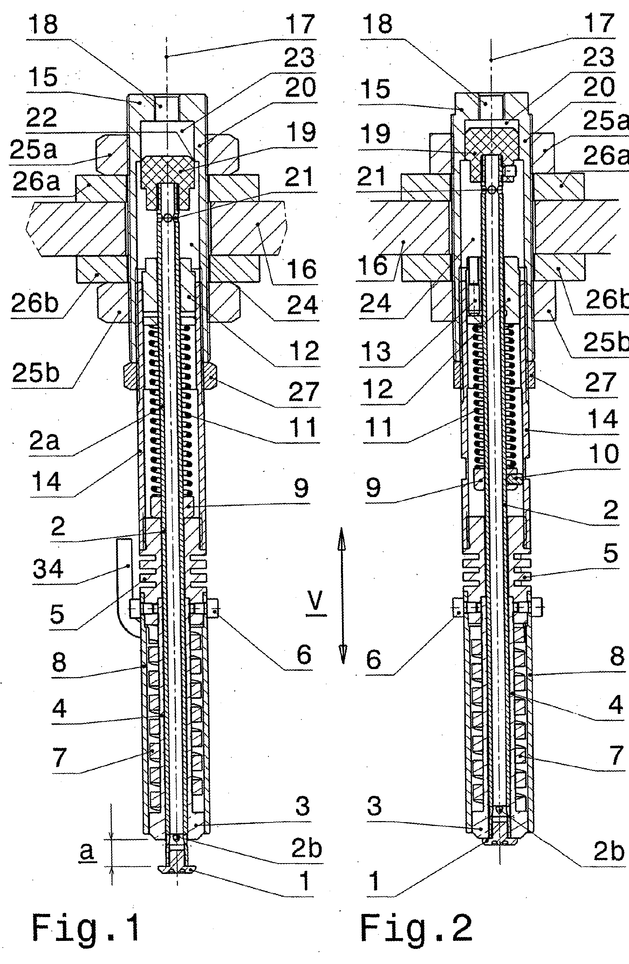

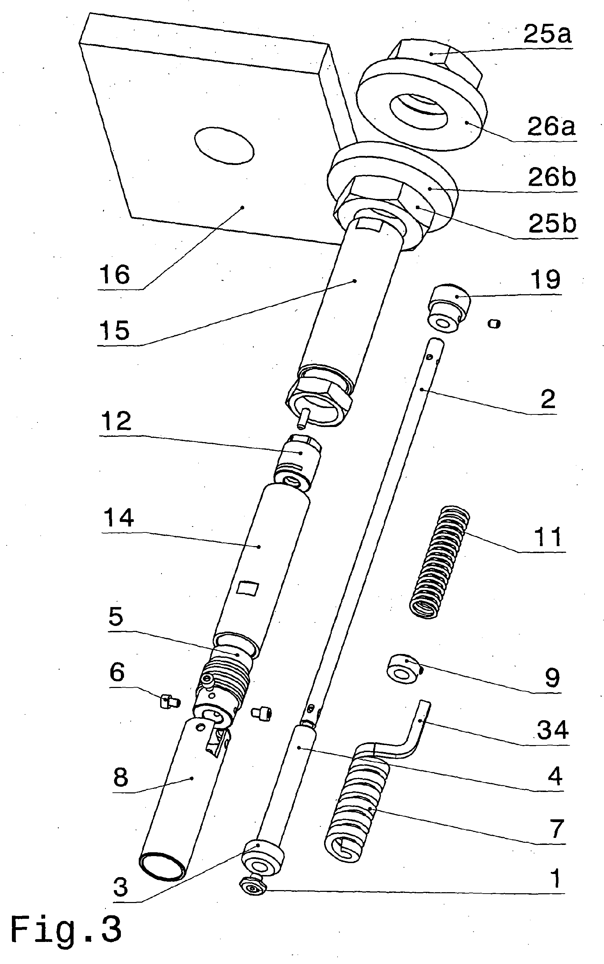

Nach Fig. 1 bis 3 enthält eine erfindungsgemäße Vorrichtung zum Verbinden von Gegenständen durch Nietschweißen eine nicht näher dargestellte Kalotte 1, die individuell der Form und der Größe eines ebenfalls nicht dargestellten Nietdoms bzw. eines an diesen anzuformenden Nietkopfs angepaßt ist. Die Kalotte 1 ist an einem in Fig. 1 und 2 unteren Ende eines Trägerrohrs 2 vorgesehen und an diesem befestigt oder auswechselbar angebracht. Der Kalotte 1 ist weiterhin ein Heizelement 3 zugeordnet, das an einem in Fig. 1 und 2 unteren Ende eines weiteren Trägerrohrs 4 vorgesehen und an dieses z. B. angeformt ist. Die beiden Trägerrohre 2 und 4 sind koaxial angeordnet und teleskopartig ineinander gesteckt, wobei zweckmäßig das Trägerrohr 2 innen und das Trägerrohr 4 außen angeordnet ist. Die beiden Trägerrohre 2, 4 sind außerdem vorzugsweise mit Gleitsitz und mit wenig Spiel axial relativ zueinander verschiebbar. Dadurch ist es möglich, die Kalotte 1 in einer aus Fig. 1 ersichtlichen Grundstellung anzuordnen, in der sie einen Abstand a vom Heizelement 3 hat, oder durch Relativverschiebung der Trägerrohre 2, 4 in eine Arbeitsstellung nach Fig. 2 zu bringen, in der sie am Heizelement 3 anliegt. Die dabei zur Anlage kommenden Stirnflächen sind vorzugsweise plan.

An einem vom Heizelement 3 beabstandeten Ende des äußeren Trägerrohrs 4 ist ein Isolator 5 vorgesehen, der z. B. mittels einer Schraube 6 befestigt ist und aus einem die Wärme schlecht leitenden Material wie z. B. Titan oder einer Keramik besteht, während das Heizelement 3 und das Trägerrohr 4 vorzugsweise aus einem die Wärme gut leitenden und gut speichernden Material hergestellt sind. Außerdem ist dem äußeren Trägerrohr 4 eine Heizquelle 7 zugeordnet, die vorzugsweise aus einer um das Trägerrohr 4 gewickelten, kontinuierlich betreibbaren, elektrischen Heizwendel besteht. Der Außenraum zwischen dem Heizelement 3 und dem Isolator 5 ist von einem Schutzrohr 8 umgeben.

Das innere Trägerrohr 2 ist länger als das äußere Trägerrohr 4 und durchragt mit einem Mittelabschnitt 2a den Isolator 5. In einem Bereich, der auf der von der Kalotte 1 abgewandten Seite aus dem Isolator 5 herausragt, ist ein hohlzylindrischer Stellring 9 auf den Mittelabschnitt 2a aufgezogen und mittels einer Schraube 10 an diesem festgelegt. Der Stellring 9 liegt in der Grundstellung, in der das Trägerrohr 2 am weitesten in Richtung des Heizelements 3 vorgeschoben ist, am Isolator 5 an (Fig. 1). In dieser Grundstellung hat die Kalotte 1 den Abstand a vom Heizelement 3, so daß dieser Abstand a durch Betätigen der Schraube 10 und axiale Verschiebung des Stellrings 9 auf dem Trägerrohr 2 in den erforderlichen Grenzen verändert werden kann.

Die beschriebene Grundstellung wird im übrigen durch eine Kraft erreicht, die bei vertikaler Anordnung der Vorrichtung entsprechend Fig. 1 und 2 z. B. die Schwerkraft sein kann, sofern die Reibung zwischen den Trägerrohren 2 und 4 ausreichend gering ist. Vorzugsweise wird diese Kraft zumindest teilweise durch eine Feder 11 aufgebracht. Im Ausführungsbeispiel ist die Feder 11 eine auf den Mittelabschnitt 2a des Trägerrohrs 2 aufgezogene Schraubenfeder und einerseits am Stellring 9, andererseits an einem weiteren, vorzugsweise hohlzylindrischen Stellring 12 abgestützt. Dieser Stellring 12 ist einerseits auf einer vom Isolator 5 abgewandten Seite des Stellrings 9 auf das Trägerrohr 2 aufgeschoben und auf diesem axial verschiebbar geführt, andererseits mit einer Klemmschraube 13 in einem freien Ende eines weiteren Schutzrohrs 14 befestigt, das an einer vom Schutzrohr 8 abgewandten Seite des Isolators 5 fest mit diesem verbunden ist und die Feder 11 nach außen hin abdeckt. Durch axiale Einstellung des Stellrings 12 im Schutzrohr 14 in der einen oder anderen Richtung kann der axiale Abstand zwischen dem Isolator 5 und dem weiteren Stellring 12 und daher die Kraft eingestellt werden, mittels derer die Kalotte 1 in ihre Grundstellung nach Fig. 1 vorgespannt wird.

Das Schutzrohr 14 weist an einem vom Isolator 5 entfernten Ende einen Außengewindeabschnitt auf und wird mit diesem in einen Innengewindeabschnitt eines vorzugsweise hohlzylindrischen Gehäuses 15 eingedreht, das zusammen mit den beschriebenen Teilen ein Nietwerkzeug bildet und einen Außengewindeabschnitt aufweist, der zur Festlegung des Nietwerkzeugs an einer Tragplatte 16 dient.

Die Tragplatte 16 ist Bestandteil einer nicht dargestellten, an sich bekannten und z. B. pneumatisch betätigbaren Vorschubeinheit, mittels derer die gesamte an ihr befestigte, das Nietwerkzeug aufweisende Vorrichtung parallel zu einem Doppelpfeil v und parallel zu einer Längsachse 17 des Nietwerkzeugs hin und her bewegt werden kann.

Das beschriebene Nietwerkzeug weist ferner Mittel zur Kühlung der Kalotte 1 auf. Einen Bestandteil dieser Mittel bildet z. B. das innere Trägerrohr 2, das an seinem die Kalotte 1 tragenden Ende mit radialen Kühlschlitzen 2b (Fig. 1) versehen ist. In einer ersten Variante ist außerdem das Gehäuse 15, in das auch ein von der Kalotte 1 entferntes Ende des Trägerrohrs 2 ragt, mit einem Anschluß 18 für ein gasförmiges Kühlmedium, insbesondere Luft oder ggf. auch Stickstoff versehen. Daher kann bei Bedarf das Kühlmedium über den Anschluß 18 in das Gehäuse 15 eingeleitet werden, von wo aus es dann durch das Trägerrohr 2 zu dessen Kühlschlitzen 2b geleitet wird. Ein Ausströmen des Kühlmediums an einer anderen Stelle des Gehäuses 15 wird insbesondere durch dessen abdichtende Schraubverbindung mit dem Schutzrohr 14 verhindert.

Nach einer weiteren Variante der erfindungsgemäßen Vorrichtung wird die Kraft der Feder 11 durch pneumatische Mittel unterstützt oder bei Bedarf ersetzt. Hierzu dient ein Kolben 19, der an dem im Gehäuse 15 angeordneten Ende des inneren Trägerrohrs 2 befestigt ist. Der Kolben 19 ist in einem zylindrischen, als pneumatischer Zylinder 20 wirkenden Teil des Gehäuses 15 mit Gleitsitz geführt, in Richtung des Doppelpfeils v verschiebbar gelagert und dabei z. B. zwischen dem Anschluß 18 und dem weiteren Stellring 12 angeordnet. Dabei ist die Anordnung so getroffen, daß beim Verbinden des Anschlusses 18 mit einer Druckquelle das verwendete Druckmedium, ausgehend von der Arbeitsstellung nach Fig. 2, entweder den Kolben 19 und mit ihm die Kalotte 1 oder bei festgehaltenem Trägerrohr 2 umgekehrt das Gehäuse 15 und mit ihm das Heizelement 3 in die aus Fig. 1 ersichtliche Grundstellung zu verschieben sucht.

Eine Modifikation des beschriebenen Ausführungsbeispiels ergibt sich durch Kombination der Mittel zur Kühlung der Kalotte 1 und der pneumatischen Mittel. Zu diesem Zweck weist einerseits das Trägerrohr 2 zwischen dem weiteren Stellring 12 und dem Kolben 19 radiale Querbohrungen 21 auf. Andererseits ist die aus dem Kolben 19 und dem Zylinder 20 gebildete Einheit in diesem Fall so ausgebildet, daß beim Verbinden des Anschlußes 18 z. B. mit einer Druckluftquelle zunächst die aus Fig. 1 ersichtliche Grundstellung zwischen dem Kolben 19 und dem Zylinder 20 hergestellt und beim Erreichen dieser Grundstellung dann ein Ringspalt 22 zwischen dem Kolben 19 und dem Zylinder 20 freigegeben wird, wie ebenfalls aus Fig. 1 ersichtlich ist. Dieser Ringspalt 22 stellt eine strömungsmäßige Verbindung zwischen dem Anschluß 18 und einem zwischen diesem und dem Kolben 19 befindlichen Gehäuseteil 23 einerseits und einem auf der anderen Seite des Kolbens 19 befmdlichen Gehäuseteil 24, den Querbohrungen 21, dem inneren Trägerrohr 2 und den Kühlschlitzen 2b andererseits her, so daß das Druckmedium gleichzeitig als Kühlmedium durch die Kühlschlitze 2b ausströmen kann, sofern diese geöffnet sind.

### Die beschriebene Vorrichtung wird im wesentlichen wie folgt betrieben:

Es werden zunächst die für eine Schweißaufgabe erforderlichen Einstellungen vorgenommen. Hierzu wird mittels des Stellrings 9 das gewünschte Maß a vorgewählt und mittels des weiteren Stellrings 12 die Kraft der Feder 11 eingestellt, indem der Stellring 12 bei abgenommenem Gehäuse 15 mittels der Klemmschraube 13 axial am Schutzrohr 14 festgelegt wird. Schließlich wird das Gehäuse 15 auf das Schutzrohr 14 aufgedreht und danach mit Hilfe von beidseits der Tragplatte 16 auf seinen Außengewindeabschnitt aufgedrehten Muttern 25a, 25b und dazwischen gelegten Unterlegscheiben 26a und 26b in einer solchen Höhe an der Tragplatte 16 befestigt, daß das Nietwerkzeug bei einer z. B. mit pneumatischen Mittel erfolgenden Hin- und Herbewegung der Tragplatte 16 den zum Nieten erforderlichen Hub ausführt. Mit einer auf das Schutzrohr 14 aufgedrehten Kontermutter 27 kann dessen axiale Lage am Gehäuse 15 zusätzlich gesichert werden.

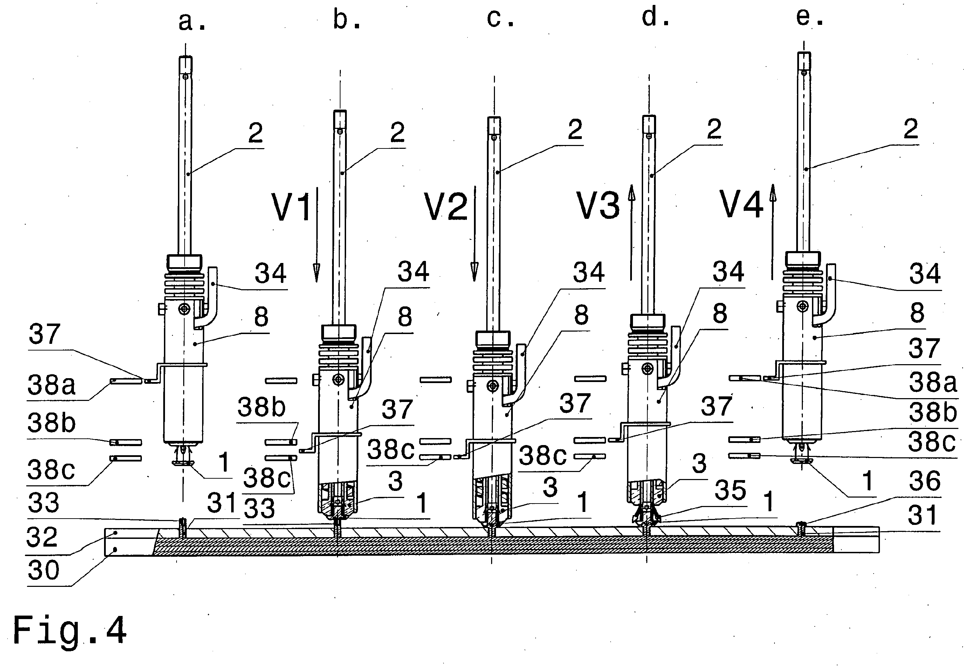

Die zur Durchführung eines Nietzyklus erforderlichen Bewegungen der Vorrichtung ergeben sich insbesondere aus Fig. 4. Diese zeigt schematisch einen ersten Gegenstand 30, an den ein Verbindungselement 31 angeformt ist, und einen zweiten Gegenstand 32, der an der gewünschten Verbindungsstelle eine von einem Nietdom 33 des Verbindungselements 31 durchragtes Loch aufweist.

Die beschriebene Vorrichtung ist zunächst, wie die Position a. in Fig. 4 zeigt, oberhalb des Verbindungselements 31 und koaxial zu dessen Nietdom 33 angeordnet, wobei das Nietwerkzeug die Grundstellung nach Fig. 1 einnimmt. Die Vorrichtung wird dann entsprechend der Position b. der Fig. 4 in Richtung eines Pfeils v1 in eine Stellung vorgeschoben, in welcher die Kalotte 1 gerade das zugewandte freie Ende des Nietdoms 33 berührt. Das hat zur Folge, daß das innere Trägerrohr 2 der Kalotte 1 beim weiteren Absenken der Vorrichtung in Richtung eines Pfeils v2 allmählich gegen die Wirkung einer Kraft, die z. B. die Schwerkraft oder die Kraft der Feder 11 sein kann, tiefer in das äußere Trägerrohr 4 hineingedrückt wird, bis sich die Kalotte 1 mit ihrer oberen Stirnfläche gegen die untere Stirnfläche des Heizelements 3 legt und die Stellung c. in Fig. 4 erreicht ist. Die Heizquelle 7 bzw. deren Heizwendel ist zu diesem Zeitpunkt über einen Anschlußkontakt 34 in nicht näher dargestellter Weise an eine Stromquelle angeschlossen, so daß das äußere Trägerrohr 4 und damit auch das Heizelement 3 auf eine Temperatur aufgeheizt werden, die für den Schweißvorgang erforderlich ist.

Aufgrund der beiderseitigen Berührung der Kalotte 1 und des Heizelements 3 wird die in diesem gespeicherte Wärmeenergie sehr schnell und effektiv auf die Kalotte 1 und von dieser auf das Verbindungselement 31 bzw. den Nietdom 33 übertragen. Das Material des Nietdoms 33 beginnt daher zu schmelzen, wobei das geschmolzene Material beim weiteren Absenken der Vorrichtung in Richtung des Pfeils v2 in die Kalotte 1 eindringt und allmählich einen Nietkopf 36 ausbildet. Dabei werden die Kalotte 1 und das Heizelement 3 gemeinsam dem sich plastifizierenden Nietdom 33 vorzugsweise so lange in Richtung des Pfeils v2 nachgefahren, bis die Kalotte 1 die Oberfläche des Gegenstandes 32 bzw. die gewünschte Nietdomwurzel erreicht hat, wie die Position c. in Fig. 4 zeigt.

Zur Abkühlung des gebildeten Nietkopfs wird jetzt die Vorrichtung einschließlich des äußeren Trägerrohrs 4 über das Gehäuse 15 und in Richtung eines Pfeils v3 wieder etwas angehoben, um dadurch die Kalotte 1 axial vom Heizelement 3 zu trennen bzw. abzuheben, wie die Position d. in Fig. 4 zeigt. Das Anheben des Trägerrohrs 4 kann, falls die Tragplatte 16 mit einer pneumatischen Zylinder/Kolben-Anordnung betätigt wird, z. B. dadurch erfolgen, daß die Zylinder/Kolben-Anordnung drucklos geschaltet wird. Weil die Kalotte 1 auf dem Gegenstand 32 bzw. dem gebildeten Nietkopf stationär gehalten ist, kann jetzt z. B. die Feder 11 über den weiteren Stellring 12 das Gehäuse 15, die Tragplatte 16 und damit auch das äußere Trägerrohr 4 in Richtung des Pfeils v3 axial anheben, bis der Stellring 9 am Isolator 5 anliegt und die aus Fig. 1 ersichtliche Grundstellung mit dem Abstand a zwischen der Kalotte 1 und dem Heizelement 3 erreicht ist. Die Kalotte 1 verbleibt dabei vorerst noch in der aus der Position d. der Fig. 4 ersichtlichen Stellung.

Gleichzeitig kann die Kalotte 1 z. B. mit einer nicht dargestellten Blasluftquelle von außen her abgekühlt werden. Besonders vorteilhaft ist jedoch die Anwendung der im Ausführungsbeispiel dargestellten Kühlmittel. Danach sind die Kühlschlitze 2b axial in einer solchen Lage am inneren Trägerrohr 2 angebracht, daß sie in dessen aus Fig. 2 ersichtlicher Stellung vom Heizelement 3 bzw. vom äußeren Trägerrohr 4 abgedeckt und verschlossen sind, beim Verschieben des inneren Trägerrohrs 2 in die Grundstellung nach Fig. 1 jedoch allmählich aus dem Trägerrohr 4 bzw. dem Heizelement 3 heraustreten und dann frei liegen. Daher kann jetzt ein dem Anschluß 18 zugeführter und durch das innere Trägerrohr 2 geleiteter Kühlluftstrom, der z. B. an einer von der Kalotte 1 entfernten Stelle in das Trägerrohr 2 eingeführt wird, ausströmen und zur Abkühlung des gebildeten Nietkopfs zumindest teilweise auf die Kalotte 1 gelenkt werden, wie durch Pfeile 35 in der Position d. der Fig. 4 angedeutet ist.

Wird bei dieser Verfahrensweise zusätzlich vom Kolben 19 in Fig. 1 und 2 Gebrauch gemacht, kann das axiale Anheben des Gehäuses 15 und des äußeren Trägerrohrs 4 durch ein über den Anschluß 18 in das Gehäuseteil 23 eingeleitetes Druck- und Kühlmedium bewirkt bzw. unterstützt werden. Dieses Druck- und Kühlmedium tritt dann nach der Bildung des Ringspalts 22 durch den auch als Ventil wirkenden Kolben 19 über das Gehäuseteil 24 und die Querbohrungen 21 in das innere Trägerrohr 2 ein und bewirkt dadurch maßgeblich die Kühlung in der beschriebenen Weise. Die Feder 11 kann in diesem Fall vergleichsweise schwach ausgebildet werden, so daß sie der Herstellung der Arbeitsstellung nach Position c. in Fig. 4 nur wenig Widerstand entgegensetzt.

Nach ausreichend tiefer Abkühlung des plastifizierten Materials des Nietdoms 33 unter die Plastifizierungstemperatur wird die Vorrichtung durch Betätigung der Vorschubeinheit in Richtung eines Pfeils v4 wieder in die Ausgangsstellung zurückgefahren, die in Position e. der Fig. 4 dargestellt ist und der Position a. der Fig. 4 entspricht. Ein durch den beschriebenen Schweißzyklus an den Nietdom 33 angeformter Nietkopf 36 hält dann die beiden Gegenstände 30, 32 fest zusammen. Anschließend kann ein weiterer Schweißzyklus vorbereitet werden.

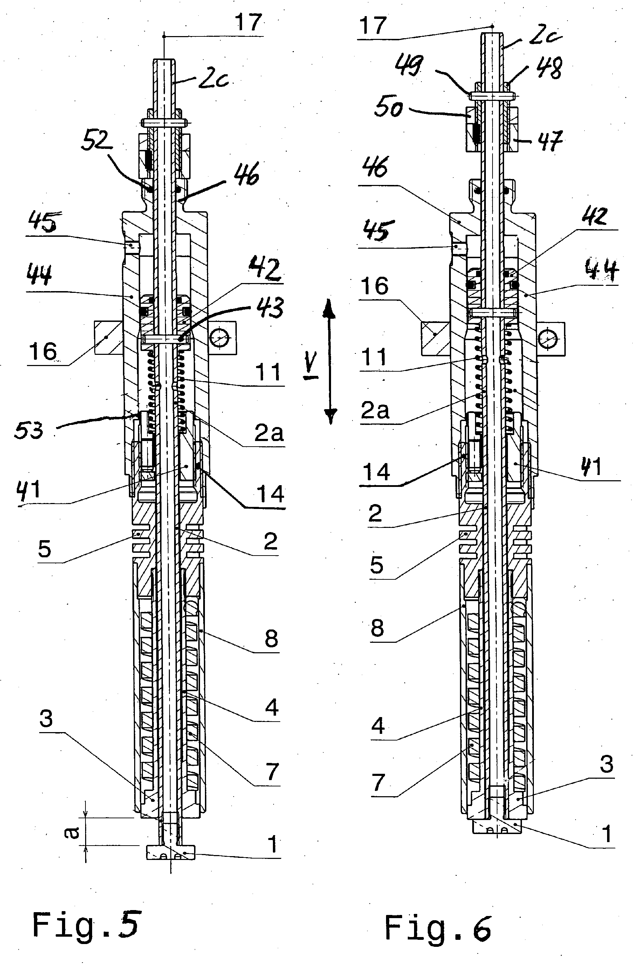

Fig. 5 bis 7 zeigen eines zweites, derzeit für am besten gehaltenes Ausführungsbeispiel der erfindungsgemäßen Vorrichtung, wobei gleiche Teile mit denselben Bezugszeichen in Fig. 1 bis 4 versehen sind. Insbesondere sind beim zweiten Ausführungsbeispiel, wie Fig. 5 und 6 zeigen, bei im wesentlichen gleicher Funktion auch die Kalotte 1, das Trägerrohr 2, das Heizelement 3, das weitere Trägerrohr 4, der Isolator 5, die Heizvorrichtung 7, die Schutzrohre 8 und 14, die Feder 11, die Tragplatte 16 und die Längsachse 17 vorhanden.

Im Unterschied zu Fig. 1 liegt die Kalotte 1 hier in ihrer Grundstellung am Heizelement 3 an (Fig. 6). Diese Grundstellung wird wie in Fig. 1 durch die Kraft der Feder 11 erreicht, doch hat die Feder 11 gegenüber Fig. 1 eine andere Wirkungsrichtung. Dies ist eine Folge davon, daß ein vorzugsweiser hohlzylindrischer, dem Stellring 12 (Fig. 1) im wesentlichen entsprechender Stellring 41, der nahe dem Isolator 5 an der Innenseite des Schutzrohrs 14 befestigt ist, das in Fig. 5 und 6 untere Ende der Feder 11 abstützt, während ein oberes Ende der Feder 11 an einem dem Kolben 19 nach Fig. 1 und 2 ähnlichen Kolben 42 anliegt, der mittels eines Querstifts 43 auf dem Mittelabschnitt 2a des Trägerrohrs 2 befestigt ist. Der Kolben 42 ist dabei auf der vom Isolator 5 abgewandten Seite des Stellrings 41 angeordnet, und durch axiale Einstellung des Stellrings 41 kann dessen axialer Abstand vom Kolben 42 eingestellt werden. Dadurch wird gleichzeitig auch die Kraft eingestellt, mittels derer der Kolben 42 und damit das Trägerrohr 2 in einer vom Heizelement 3 abgewandten Richtung axial vorgespannt und damit die Kalotte 1 in der Grundstellung nach Fig. 6 gegen das Heizelement 3 gedrückt wird.

Das in Fig. 5 und 6 verkürzte Schutzrohr 14 weist an dem vom Isolator 5 entfernten Ende einen Außengewindeabschnitt auf, auf den ein Innengewindeabschnitt eines hohlzylindrischen Gehäuses 44 aufgeschraubt ist. Dieses Gehäuse 44 weist einen Anschluß 45 für ein Druckmedium, insbesondere Druckluft auf, bildet mit den anderen, aus Fig. 5 und 6 ersichtlichen Teilen ein Nietwerkzeug und ist mit einem Außengewindeabschnitt versehen, der zur Festlegung des Nietwerkzeugs an der Tragplatte 16 dient (vgl. auch Fig. 1 und 2).

Der Innenmantel des Gehäuses 44 dient als Zylinder, in dem der vorzugsweise zylindrische Kolben 42 mit Gleitsitz geführt ist und in Richtung des Doppelpfeils v verschiebbar gelagert ist. Dabei ist die Anordnung so getroffen, daß der Anschluß 45 in der Grundstellung nach Fig. 6 zwischen der vom Stellring 41 entfernten Stirnfläche des Kolben 42 und einem oberen Abschlußdeckel 46 des Gehäuses 44 angeordnet ist. Beim Verbinden des Anschlusses 45 mit einer Druckluftquelle od. dgl. wird das verwendete Druckmedium daher den Kolben 42, ausgehend von der Grundstellung nach Fig. 6, gegen die Kraft der Feder 11 in eine Arbeitsstellung nach Fig. 5 verschieben.

Die Einstellung des Abstands a (vgl. Fig. 1 und 5) erfolgt beim zweiten Ausführungsbeispiel mit Mitteln, die von außen her leicht zugänglich sind. Hierzu ist ein über den Mittelabschnitt 2a hinaus verlängerter Endabschnitt 2c des Trägerrohrs 2 durch den Abschlußdeckel 46 des Gehäuses 45 axial nach außen geführt und mit einer Stellmutter 47 versehen, deren axialer Abstand vom Abschlußdeckel 46 genau dem Wert a entspricht. Die Stellmutter 47 ist z. B. entweder direkt auf einen Gewindeabschnitt des Endabschnitts 2c oder auf eine mit einem Außengewinde versehene, auf den Endabschnitt 2c aufgeschobene Hülse 48 aufgeschraubt, die mit einem Querstift 49 am Endabschnitt 2c befestigt ist. Nach dem Einstellen des Abstands a mittels der Stellmutter 47 wird deren axiale Lage zweckmäßig mit einer Kontermutter 50 gesichert.

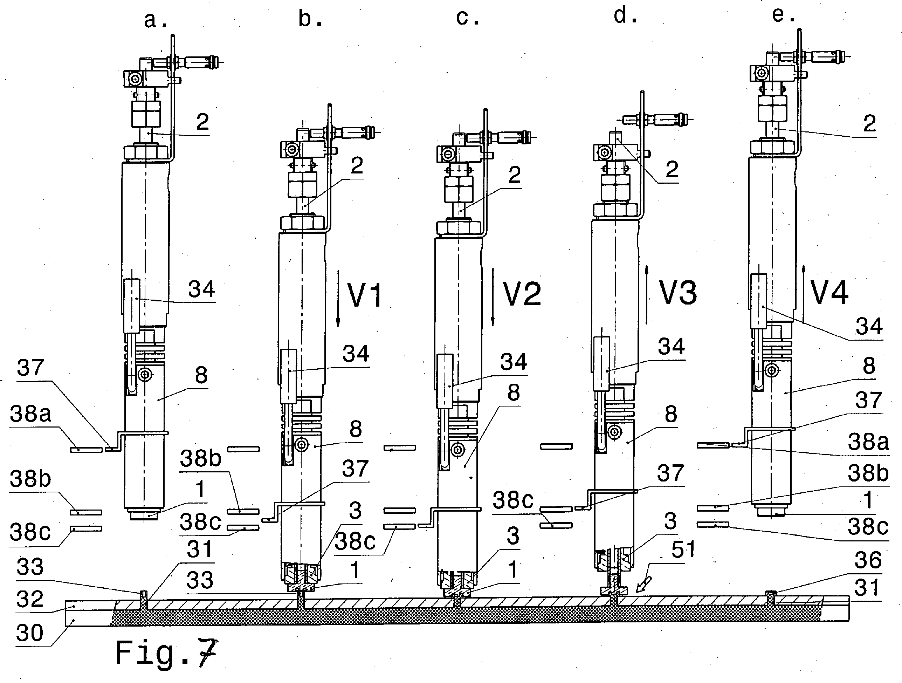

Um zu vermeiden, daß die gemäß Fig. 1 und 2 das Trägerrohr 2 durchströmende Kühlluft im Bereich der Heizvorrichtung 7 zu stark erwärmt wird, bevor sie die Kalotte 1 erreicht, wird die Kühlluft beim Ausführungsbeispiel nach Fig. 5 und 7 vorzugsweise mit nicht dargestellten Rohren od. dgl. direkt auf die Kalotte 1 geblasen.

Die aus Fig. 5 bis 7 ersichtliche Vorrichtung wird im wesentlichen wie folgt betrieben:

Wie beim Ausführungsbeispiel nach Fig. 1 bis 4 werden zunächst die notwendigen Einstellungen vorgenommen. Insbesondere wird mittels der Stellmutter 47 ein zweckmäßiger Abstand a eingestellt. Die danach zur Durchführung eines Nietzyklus erforderlichen Bewegungen der Vorrichtung ergeben sich aus Fig. 7.

Im Unterschied zu Fig. 1 bis 4 liegt die Kalotte 1 in der Grundstellung nach Fig. 6 und Position a. von Fig. 7 an dem Heizelement 3 an. Dadurch wird die Kalotte 1 bereits vor dem Absenken der Vorrichtung auf den Nietdom 33 vorgewärmt. Bis zum Erreichen der Position c. in Fig. 7 findet daher eine kontinuierliche Erwärmung der Kalotte 1 statt, wodurch die Bearbeitungszeit weiter verkürzt werden kann. Im übrigen arbeitet die Vorrichtung bis zum Erreichen der Position c. in Fig. 7 analog zu Fig. 4.

Zur Abkühlung des gebildeten Nietkopfs 36 wird die Vorrichtung jetzt mit dem Gehäuse 44 angehoben, wobei gleichzeitig die nicht gezeigte Druckluftquelle od. dgl. eingeschaltet und dadurch der Kolben 42 entgegen der Kraft der Feder 11 in Richtung des Stellrings 41 bewegt wird, bis die Stellmutter 47 am Abschlußring 46 anschlägt, d.h. der Abstand a erreicht ist (Fig. 5 und Position d. in Fig. 8). Dadurch ist die Kalotte 1 ausreichend weit vom Heizelement 3 beabstandet, so daß sie abkühlen und bei Bedarf mit zusätzlicher Blasluft (Pfeil 51 in Position d. von Fig. 7) gekühlt werden kann. Dabei ist klar, daß das Gehäuse 44 mittels Dichtungen 52, 53 gegenüber dem Trägerrohr 2 und dem Stellring 41 und der Kolben 42 mittels Dichtungen 54, 55 gegenüber dem Trägerrohr 2 und dem Gehäuse 44 abgedichtet wird, soweit dies erforderlich ist.

Nach ausreichender Kühlung der Kalotte 1 wird die Vorrichtung gemäß Position e. in Fig. 7 vom fertigen Nietkopf 36 abgehoben (vgl. auch Position e. in Fig. 4). Dabei wird gleichzeitig der Druck vom Anschluß 45 genommen, so daß die Kalotte 1 unter der Wirkung der Feder 11 in ihre Grundstellung nach Fig. 6 zurückkehren kann. Gleichzeitig damit kann die Kühlluft wieder abgeschaltet werden.

Im übrigen entspricht die Arbeitsweise der Vorrichtung nach Fig. 5 bis 7 der oben anhand der Fig. 1 bis 4 beschriebenen Arbeitsweise des ersten Ausführungsbeispiels.

Aus der beschriebenen Verfahrensweise werden zahlreiche Vorteile der Erfindung ersichtlich. Insbesondere ist es möglich, das Heizelement 3 mit einer wesentlich größeren Masse bzw. einem wesentlich größeren Volumen als die Kalotte 1 zu versehen, um dadurch den Plastifizierungsvorgang zu beschleunigen, ohne gleichzeitig den danach erfolgenden Abkühlprozeß zu behindern. Das ergibt sich daraus, daß einerseits das Heizelement 3 zwecks Bildung eines großen Wärmespeichers vergleichsweise groß ausgebildet werden und infolgedessen die in ihm gespeicherte Wärmeenergie vergleichsweise schnell auf die kleine Kalotte 1 und über diese auf den Nietdom 33 übertragen kann, so lange die Kalotte 1 während der Erwärmungs- bzw. Plastifizierungsphase am Heizelement 3 anliegt. Andererseits kann der Kühlvorgang ebenfalls schnell erfolgen, weil der Wärmespeicher bzw. das Heizelement 3 während der Kühlphase von der Kalotte 1 getrennt wird und diese daher keine Wärmeenergie mehr aufnehmen kann. Dies gilt selbst dann, wenn zur weiteren Reduzierung der Schweißdauer die Heizvorrichtung 7 in bevorzugter Weise ständig eingeschaltet bleibt und ggf. mit einer Regelschaltung und einem z. B. in die Heizvorrichtung 7 integrierten Temperaturfühler so betätigt wird, daß das Heizelement 3 permanent eine bestimmte Temperatur oberhalb der Plastifizierungstemperatur des Nietdoms 33 annimmt. Der bisher existierende Widerspruch zwischen der Forderung nach einer großen zu speichernden Wärmemenge einerseits, was eine große Masse der Kalotte 1 voraussetzt, und der Forderung nach einer kleinen Masse für dieselbe Kalotte 1 zur Erzielung einer schnellen und effizienten Abkühlung des Nietkopfs 36 bis zur Erstarrung wird erfindungsgemäß durch die Möglichkeit der Trennung der Kalotte 1 vom Heizelement 3 wirkungsvoll vermieden. Abgesehen davon ergibt sich der Vorteil, daß die Nachführung der Vorrichtung zumindest von der Position b. zur Position c. in Fig. 4 und 7 mit optimaler Geschwindigkeit durchgeführt und beendet werden kann, weil der Plastifizierungsvorgang besser als bisher kontrollierbar ist. Außerdem ermöglicht die kleine Masse der Kalotte 1 ein schnelles Abkühlen des Nietkopfs 36 mit Hilfe eines äußeren Kühlmediums. Die insgesamt benötigten Aufheiz- bzw. Abkühlungsphasen sind daher bei Anwendung der erfindungsgemäßen Vorrichtung vergleichsweise kurz. Dies gilt insbesondere dann, wenn das Heizelement 3 und ggf. das Trägerrohr 4 aus einem gut wärmeleitenden Material mit hoher Wärmerückhaltefähigkeit bestehen, das innere Trägerrohr 2 die Wärme schlecht leitet und die Kalotte 1 ein ggf. auswechselbar in das Trägerrohr 2 eingesetztes Bauteil aus einem gut wärmeleitenden Material ist. Ein weiterer Vorteil der Erfindung besteht schließlich darin, daß der Isolator 5 den Wärmeübergang vom Trägerrohr 4 auf andere Teile der Vorrichtung verhindert.

Die erforderlichen Stellungen der beschriebenen Vorrichtung können, wie in Fig. 4 und 7 angedeutet ist, mittels eines z. B. am Schutzrohr 8 befestigten Tastelements 37 und mehreren dem Tastelement 37 zugeordneten Sensoren 38a bis 38c überwacht werden. Dabei zeigt ein Sensor 38a die Ausgangsstellung nach Position a. und e. in Fig. 4 und 7 an. Ein Sensor 38b gibt ein Signal ab, wenn das Nietwerkzeug diejenige Stelle erreicht hat, in der sich die Kalotte 1 auf den Nietdom 33 auflegt und die in Position b. der Fig. 4 und 7 gerade überschritten ist. Schließlich signalisiert ein Sensor 38c das Erreichen der tiefsten vorgesehenen Stellung der Vorrichtung, so daß dieser Sensor 38c dazu verwendet werden kann, eine Umkehrung der Bewegungsrichtung der Vorschubeinheit gemäß v2 in die Bewegungsrichtung gemäß Pfeil v3 bzw. ein Abschalten der Pneumatik zu bewirken, um die Stellung gemäß Position d. in Fig. 4 und 7 zu erreichen. Nach einer voreingestellten Zeitdauer, die zur Kühlung benötigt wird, erfolgt dann die Rückkehr der Vorrichtung in die Stellung e. nach Fig. 4 und 7.

Sollen zur Durchführung einer Schweißaufgabe gleichzeitig mehrere Nietungen vorgenommen werden, können in die Tragplatte 16 entsprechend viele Vorrichtungen nebeneinander eingesetzt werden, so daß die Tragplatte 16 die erforderlichen Bewegungshübe für alle diese Vorrichtungen gleichzeitig ausführt, ggf. mit unterschiedlichen Hublängen entsprechend den gewählten Einstellungen. Zweckmäßig ist ein solches Vorgehen gegenüber der üblichen Einzelanordnung allerdings nur dann, wenn die Achsen der verschiedenen Nietdome im wesentlichen parallel zueinander angeordnet sind und im wesentlichen ähnliche Dimensionen haben, die zu ähnlichen Erwärmungs- und Kühldauern führen.

Die Erfindung ist nicht auf die beschriebenen Ausführungsbeispiele beschränkt, die auf vielfache Weise abgewandelt werden können. Dies gilt beispielsweise für die geometrische Ausbildung des Heizelements 3 und der zugehörigen Heizvorrichtung 7, die auch anders als dargestellt ausgebildet sein können. Dabei ist es nicht unbedingt erforderlich, wenn auch besonders vorteilhaft, daß das Heizelement 3 die Kalotte 1 während der Plastifizierungsphase körperlich berührt, da je nach der Art der Heizvorrichtung eine schnelle und intensive Übertragung von Wärme auf die Kalotte 1 auch ohne direkten Kontakt möglich ist. Weiter ist klar, daß das Verbindungselement 31 (Fig. 4) ein die beiden Gegenstände 30, 32 durchragendes, auf seiner Rückseite mit einem angeformten Kopf versehenes, separates Element sein kann. Weiter sollen die Bezeichnungen "Niet- bwz. Nietdomschweißen" im Rahmen der vorliegenden Erfindung auch das sog. Zapfenschweißen einschließen, das sich vom beschriebenen Nietdomschweißen im Prinzip nur dadurch unterscheidet, daß die Nietdome 31 hohlzylindrisch ausgebildet, d. h. mit je einem mittleren Durchgang versehen sind. Weiterhin können andere als die dargestellten Mittel zur Trennung bzw. zum Zusammenführen der Kalotte 1 und des Heizelements 3 vorgesehen werden. Schließlich versteht sich, daß die verschiedenen Merkmale auch in anderen als den beschriebenen und dargestellten Kombinationen angewendet werden können.

## Patentansprüche

1. Verfahren zum Verbinden von Gegenständen (30, 32) mittels wenigstens eines plastifizierbaren Verbindungselements (31), wobei an dem Verbindungselement (31) durch Anlegen und Nachführen einer erwärmten Kalotte (1) ein Nietkopf (36) ausgebildet und die Kalotte (1) nach dem Abkühlen des Nietkopfs (36) von diesem abgezogen wird, **dadurch gekennzeichnet, daß** die Erwärmung der Kalotte (1) mit Hilfe eines ihr nachführbaren Heizelements (3) erfolgt und das Heizelement (3) zur Beschleunigung der Abkühlung vor dem Abziehen der Kalotte (1) vom Nietkopf (36) von dieser getrennt wird.

2. Verfahren nach Anspruch 1, **dadurch gekennzeichnet, daß** die Kalotte (1) nach der Trennung vom Heizelement (3) und vor dem Abziehen vom Nietkopf (36) mit einem gasförmigen Kühlmedium gekühlt wird.

3. Verfahren nach Anspruch 2, **dadurch gekennzeichnet, daß** die Zuführung des Kühlmittels zur Kalotte (1) durch ein an dieser befestigtes, mit Kühlschlitzen (2b) versehenes Trägerrohr (2) erfolgt und daß die Kühlschlitze (2b) während der Erwärmung der Kalotte (1) durch das Heizelement (3) abgedeckt und durch das Abziehen des Heizelements (3) von der Kalotte (1) für das Ausströmen des Kühlmedium freigegeben werden.

4. Verfahren nach einem der Ansprüche 1 bis 3, **dadurch gekennzeichnet, daß** das Heizelement (3) kontinuierlich beheizt wird.

5. Vorrichtung zum Verbinden von Gegenständen (30, 32) mittels wenigstens eines, durch Wärme plastifizierbaren Verbindungselements (31), enthaltend ein in Richtung des Verbindungselements (31) vor und zurück bewegbares Nietwerkzeug, das eine zur Ausbildung eines Nietkopfs (36) am Verbindungselement (31) bestimmte Kalotte (1) und ein zur Erwärmung der Kalotte (1) bestimmtes Heizelement (3) aufweist, **dadurch gekennzeichnet, daß** das Heizelement (3) relativ zur Kalotte (1) bewegbar am Nietwerkzeug angeordnet ist.

6. Vorrichtung nach Anspruch 5, **dadurch gekennzeichnet, daß** das Heizelement (3) als Wärmespeicher ausgebildet ist.

7. Vorrichtung nach Anspruch 6, **dadurch gekennzeichnet, daß** das Heizelement (3) ein größeres Volumen als die Kalotte (1) hat.

8. Vorrichtung nach Anspruch 6 oder 7, **dadurch gekennzeichnet, daß** das Heizelement (3) aus einem gut wärmeleitenden Material besteht.

9. Vorrichtung nach einem der Ansprüche 5 bis 8, **dadurch gekennzeichnet, daß** das Nietwerkzeug zwei koaxial angeordnete Trägerrohre (2, 4) enthält, von denen das eine teleskopisch verschiebbar in dem anderen Trägerrohr gelagert ist, und daß das Heizelement (3) an einem Ende eines der Trägerrohre (4) und die Kalotte (1) an einem Ende des anderen der Trägerrohre (2) derart vorgesehen ist, daß das Heizelement (3) und die Kalotte (1) durch Relativverschiebung der beiden Trägerrohre (2, 4) aneinander annäherbar bzw. voneinander entfernbar sind.

10. Vorrichtung nach Anspruch 9, **dadurch gekennzeichnet, daß** die Kalotte (1) an einem inneren Trägerrohr (2) und das Heizelement (3) an einem äußeren Trägerrohr (4) vorgesehen und das äußere Trägerrohr (4) mit einer kontinuierlich einschaltbaren Heizvorrichtung (7) versehen ist.

11. Vorrichtung nach einem der Ansprüche 5 bis 10, **dadurch gekennzeichnet, daß** die Kalotte (1) durch eine Kraft in einer Grundstellung gehalten ist, in der sie einen vorgewählten Abstand (a) vom Heizelement (3) hat, und daß die Kalotte (1) gegen diese Kraft an das Heizelement (3) angenähert werden kann.

12. Vorrichtung nach Anspruch 11, **dadurch gekennzeichnet, daß** ein vom Heizelement (3) entferntes Ende des äußeren Trägerrohrs (4) einen Isolator (5) aufweist und das innere Trägerrohr (2) einen den Isolator (5) durchragenden Mittelabschnitt (2a) enthält, der in einem aus dem Isolator (5) herausragenden, von der Kalotte (1) entfernten Bereich mit einem ersten Stellring (9) versehen ist, der in der Grundstellung am Isolator (5) anliegt und **dadurch** den Abstand (a) der Kalotte (1) vom Heizelement (3) festlegt.

13. Vorrichtung nach Anspruch 11 oder 12, **dadurch gekennzeichnet, daß** die Kraft zumindest teilweise durch eine Feder (11) aufgebracht wird, die zwischen dem ersten Stellring (9) und einem weiteren, zur Einstellung der Federkraft bestimmten Stellring (12) abgestützt ist, der auf einer von der Kalotte (1) abgewandten Seite des ersten Stellrings (9) an einem das innere Trägerrohr (2) umgebenden Schutzrohr (14) angebracht ist.

14. Vorrichtung nach Anspruch 13, **dadurch gekennzeichnet, daß** der weitere Stellring (12) mittels einer Klemmschraube (13) am Schutzrohr (14) befestigt ist.

15. Vorrichtung nach Anspruch 14, **dadurch gekennzeichnet, daß** das Schutzrohr (14) in ein zur Befestigung des Nietwerkzeugs an einer Trägerplatte (16) bestimmtes Gehäuse (15) ragt und mit diesem lösbar verbunden ist.

16. Vorrichtung nach einem der Ansprüche 5 bis 10, **dadurch gekennzeichnet, daß** die Kalotte (1) durch die Kraft einer Feder (11) in einer Grundstellung gehalten ist, in der sie am Heizelement (3) anliegt, und daß die Kalotte (1) gegen die Kraft der Feder (11) vom Heizelement (3) abhebbar ist.

17. Vorrichtung nach Anspruch 16, **dadurch gekennzeichnet, daß** ein vom Heizelement (3) entferntes Ende des äußeren Trägerrohrs (4) einen Isolator (5) aufweist und das innere Trägerrohr (2) einen den Isolator (5) durchragenden Mittelabschnitt (2a) enthält, der in einem aus dem Isolator (5) herausragenden, von der Kalotte (1) entfernten Bereich in einem Stellring (41) gleitend geführt und mit einem von diesem beabstandeten Kolben (42) fest verbunden ist, wobei die Feder (11) zwischen dem Stellring (41) und dem Kolben (42) abgestützt ist, und daß der Kolben (42) in einem Gehäuse (44) verschiebbar gelagert ist, das auf einer von der Feder (11) abgewandten Seite des Kolbens (42) einen Anschluß (45) für ein Druckmedium aufweist.

18. Vorrichtung nach Anspruch 16 oder 17, **dadurch gekennzeichnet, daß** der Kolben (42) entgegen der Kraft der Feder (11) um ein Maß verschiebbar ist, das einem Abstand (a) der Kalotte (1) vom Heizelement (3) in einer Arbeitsstellung entspricht.

19. Vorrichtung nach Anspruch 18, **dadurch gekennzeichnet, daß** das innere Trägerrohr (2) mit einem Endabschnitt (2c) aus dem Gehäuse (44) herausragt und der Endabschnitt (2c) mit Mitteln (47 bis 50) zum Einstellen des Abstands (a) versehen ist.

20. Vorrichtung nach einem der Ansprüche 13 bis 19, **dadurch gekennzeichnet, daß** die Feder (11) eine auf den Mittelabschnitt (2a) des inneren Trägerrohrs (2) aufgezogene Schraubenfeder ist.

21. Vorrichtung nach einem der Ansprüche 5 bis 20, **dadurch gekennzeichnet, daß** sie Mittel zur Kühlung der Kalotte (1) aufweist.

22. Vorrichtung nach Anspruch 21, **dadurch gekennzeichnet, daß** die Mittel zur Kühlung das innere Trägerrohr (2) enthalten und das innere Trägerrohr (2) zur Führung eines gasförmigen Kühlmediums eingerichtet und an dem mit der Kalotte (1) versehenen Ende mit radialen Kühlschlitzen (2b) versehen ist.

23. Vorrichtung nach Anspruch 22, **dadurch gekennzeichnet, daß** ein von der Kalotte (1) entferntes Ende des inneren Trägerrohrs (2) in das Gehäuse (15) ragt und das Gehäuse (15) mit einem Anschluß (18) für das gasförmige Kühlmedium versehen ist.

24. Vorrichtung nach einem der Ansprüche 11 bis 23, **dadurch gekennzeichnet, daß** die Kraft zumindest teilweise mit pneumatischen Mitteln aufbringbar ist.

25. Vorrichtung nach Anspruch 24, **dadurch gekennzeichnet, daß** die pneumatischen Mittel einen am Gehäuse (15) ausgebildeten Zylinder (20) aufweisen, in dem ein am inneren Trägerrohr (2) befestigter Kolben (19) mit Gleitsitz geführt ist und der zu einem im Gehäuse (15) ausgebildeten Anschluß (18) für ein Druckmedium hin offen ist.

26. Vorrichtung nach Anspruch 25, **dadurch gekennzeichnet, daß** die pneumatischen Mittel gleichzeitig als Teile der Mittel zur Kühlung ausgebildet sind, indem das Druckmedium das Kühlmedium bildet, das innere Trägerrohr (2) zwischen dem weiteren Stellring (12) und dem Kolben (19) mit radialen Querbohrungen (21) versehen ist und das Gehäuse (15) durch das Druckmedium in eine Stellung verschiebbar ist, in der zwischen dem Kolben (19) und dem Zylinder (20) ein den Anschluß (18) mit den Querbohrungen (21) verbindender Ringspalt (22) entsteht.
